(19) Europäisches Patentamt
European Patent Office
Office européen des brevets

(11) **EP 4 628 452 A1**

(12) **EUROPEAN PATENT APPLICATION**
published in accordance with Art. 153(4) EPC

(43) Date of publication:
**08.10.2025 Bulletin 2025/41**

(21) Application number: **24907613.4**

(22) Date of filing: **17.04.2024**

(51) International Patent Classification (IPC):
*C01G 53/00* (2025.01)   *H01M 4/525* (2010.01)
*H01M 4/505* (2010.01)   *H01M 4/02* (2006.01)

(52) Cooperative Patent Classification (CPC):
**C01G 53/00; H01M 4/02; H01M 4/505; H01M 4/525;**
**Y02E 60/10**

(86) International application number:
**PCT/KR2024/005159**

(87) International publication number:
**WO 2025/135319 (26.06.2025 Gazette 2025/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **21.12.2023 KR 20230188601**

(71) Applicants:
• **Korea Zinc Co., Ltd.**
**Seoul 03159 (KR)**
• **Kemco**
**Seoul 03159 (KR)**

(72) Inventors:
• **LEE, Je Joong**
**Seoul 06041 (KR)**
• **CHOI, Eun Ho**
**Ulju-gun Ulsan 45003 (KR)**
• **YOUN, Hong Min**
**Ulsan 44763 (KR)**

(74) Representative: **Angerhausen, Christoph**
**Boehmert & Boehmert**
**Anwaltspartnerschaft mbB**
**Pettenkoferstrasse 22**
**80336 München (DE)**

(54) **MANUFACTURING METHOD FOR POSITIVE ELECTRODE ACTIVE MATERIAL PRECURSOR**

(57)    A method for manufacturing a positive electrode active material precursor according the the present disclosure, comprises a first step of creating the nucleus of the precursor; and a second step of growing the nucleus formed in the first step, wherein a transition metal compound solution is fed at a flow rate of 15 mL/min to 55 mL/min into a batch-type reactor during the first step and the second step, wherein a stirring speed inside the reactor during the first step is between 200 rpm and 875 rpm, and a stirring speed inside the reactor during the second step is 475 rpm or less.

FIG. 2

EP 4 628 452 A1

## Description

TECHNICAL FIELD

The present disclosure relates to a method for manufacturing a positive electrode active material precursor and, more specifically, to a method for manufacturing a positive electrode active material precursor using a batch reactor.

BACKGROUND ART

Recently, with the expansion of the battery electric vehicle (BEV) market, there has been an increasing trend in the demand for secondary batteries. A battery typically includes a cathode, an anode, an electrolyte, and a separator, wherein the cathode and anode contain active materials capable of intercalation and deintercalation of lithium ions, for example.

Among the methods for manufacturing a positive electrode active material precursor, there are typically continuous methods using a continuous stirred-tank reactor (CSTR) and batch methods using a batch reactor. The continuous method includes co-precipitating raw materials and simultaneously discharging the particles formed as precursors, while the batch method involves introducing raw materials into the reactor volume for a set period, reacting them, and then discharging the precursor after the reaction ends.

In batch reactors, as the co-precipitation reaction time progresses, microparticles of the precursor are formed. To form precursor particles of a certain size, it is necessary for the microparticles formed through initial nucleation reactions to continue growing.

However, during the reaction for the growth of precursor microparticles, new nucleation reactions take place continuously so that small-sized precursor particles continue to be generated. Accordingly, at the end of the co-precipitation reaction time, the average particle size of the precursor particles becomes smaller and the particle size distribution becomes uneven. Ultimately, the tap density, specific surface area, and other physical properties of the desired cathode active material precursor do not meet the target values, adversely affecting the charge/discharge capacity performance of the battery.

To address the problems, the affection of the precursor microparticles was controlled in conventional techniques where microparticles generated during a grinding process using an Air Classifier Mill (ACM), Air Jet Mill, etc., are captured through a separate back filter or removed by transferring the reaction solution containing the precursor from the reactor to a cyclone facility and centrifugally separating the microparticles. However, these conventional techniques increase costs and total process time due to additional processes/equipment, resulting in decreased production efficiency of the positive electrode active material precursor and reduced production efficiency (Line of Balance, LOB).

DISCLOSURE

TECHNICAL PROBLEM

The present disclosure aims to solve the above problems and to provide a method for manufacturing a precursor wherein the co-precipitation reaction condition is controlled without an additional process to minimize the formation of precursor microparticles during the precursor core growth phase, whereby precursors with a uniform particle size distribution can be manufactured.

TECHNICAL SOLUTION

According to an aspect of the present disclosure, a method for manufacturing a positive electrode active material precursor comprises a first step of creating the nucleus of the precursor; and a second step of growing the nucleus formed in the first step, wherein a transition metal compound solution is fed at a flow rate of 15 mL/min to 55 mL/min into a batch-type reactor during the first step and the second step, wherein a stirring speed inside the reactor during the first step is between 200 rpm and 875 rpm, and a stirring speed inside the reactor during the second step is 475 rpm or less.

According to an aspect of the present disclosure, the transition metal compound solution contains at least one element selected from the group consisting of nickel, cobalt, and manganese.

According to an aspect of the present disclosure, the transition metal compound solution contains: nickel in an amount of 60 mol% to 96 mol%; cobalt in an amount of 0 mol% to 20 mol%; and manganese in an amount of 4 mol% to 40 mol%.

According to an aspect of the present disclosure, a solution within the batch-type reactor has a pH of 10.5 to 13.5 in the first step.

According to an aspect of the present disclosure, a solution within the batch-type reactor has a pH of 10.5 to 13.5 in the second step.

According to an aspect of the present disclosure, a solution within the batch-type reactor has an ammonia concentration of 3,000 ppm to 7,000 ppm in the second step.

According to an aspect of the present disclosure, wherein the a nitrogen-containing compound solution is fed at a flow rate of 1.0 mL/min to 10.0 mL/min during the first step and the second step.

According to an aspect of the present disclosure, a basic compound solution is fed at a flow rate of 8.0 mL/min to 32.0 mL/min during the first step and the second step.

According to an aspect of the present disclosure, the positive electrode active material precursor generated through the first step and the second step has a Span value of 0.55 or less as measured according to the following Equation 1:

[Equation 1]

$$Span = (Particle\ diameter\ D_{90} - Particle\ diameter\ D_{10})\ /\ Particle\ average\ diameter\ D_{50}$$

According to an aspect of the present disclosure, the method further comprises a third step of washing and drying the positive electrode precursor generated through the first step and the second step.

ADVANTAGEOUS EFFECTS

According to the present disclosure, the feed rate of each component in the reactor and the stirring speed during the nucleation and growth stages of the precursor are controlled into respective constant levels, whereby it is possible to minimize the formation of microparticles in the reaction solution during the nucleation stage while reducing the co-precipitation reaction time required for manufacturing the precursor. As a result, an anode active material precursor with the targeted particle size and uniform particle size distribution can be manufactured quickly.

Furthermore, since the formation of microparticles is minimized during the nucleus growth phase in the present disclosure, there is no need for a separate process to remove microparticles, which significantly reduces the overall process time and cost. Consequently, an improvement can be brought about in the line of balance efficiency, thereby increasing the production volume of the positive electrode active material precursor.

DESCRIPTION OF DRAWINGS

FIG. 1 is a schematic diagram of a method for manufacturing a positive electrode active material precursor according to the present disclosure.

FIG. 2 is an SEM image of the positive electrode active material precursor extracted after 48 hours of co-precipitation reaction and subsequent drying according to Example 1 of the present disclosure.

FIG. 3 is an SEM image of the positive electrode active material precursor extracted after 34 hours of co-precipitation reaction and subsequent drying according to Example 2 of the present disclosure

FIG. 4 is an SEM image of the positive electrode active material precursor extracted after 55 hours of co-precipitation reaction and subsequent drying according to Comparative Example 1 of the present disclosure.

FIG. 5 is an SEM image of the positive electrode active material precursor extracted after 55 hours of co-precipitation reaction and subsequent drying according to Comparative Example 2 of the present disclosure.

MODE FOR INVENTION

Hereinafter, specific details for the practice of the present disclosure will be described in detail with reference to the accompanying drawings. However, in the following description, detailed descriptions of well-known functions or configurations will be omitted when it may make the subject matter of the present disclosure rather unclear.

In the accompanying drawings, the same or corresponding components are given the same reference numerals. In addition, in the following description of the embodiments, duplicate descriptions of the same or corresponding elements may be omitted. However, even if descriptions of components are omitted, it is not intended that such components are not included in any embodiment.

The terms used herein will be briefly described prior to describing the disclosed embodiments in detail. The terms used herein have been selected as general terms which are widely used at present in consideration of the functions of the present disclosure, and this may be altered according to the intent of an operator skilled in the art, conventional practice, or introduction of new technology. In addition, in a specific case, a term is arbitrarily selected by the applicant, and the meaning of the term will be described in detail in a corresponding description of the embodiments. Therefore, the terms used in the present disclosure should be defined based on the meaning of the terms and the overall contents of the present disclosure rather than a simple name of each of the terms.

As used herein, the singular forms "a", "an", and "the" are intended to include the plural forms as well, unless the context clearly indicates the singular forms. Further, the plural forms are intended to include the singular forms as well, unless the context clearly indicates the plural forms.

Further, throughout the description, when a portion is stated as "comprising (including)" a component, it intends to mean that the portion may additionally comprise (or include or have) another component, rather than excluding the same, unless specified to the contrary.

As used herein, the term "A and/or B" shall mean "only A, or only B, or both A and B".

Advantages and features of the disclosed embodiments and methods of accomplishing the same will be apparent by referring to embodiments described below in connection with the accompanying drawings. However, the present disclosure is not limited to the embodiments disclosed below, and may be implemented in various different forms, and the present embodiments are merely provided to make the present disclosure complete, and to fully disclose the scope of the invention to those skilled in the art to which the present disclosure pertains.

The method for manufacturing a positive electrode active material precursor according to the present disclosure includes a first step of creating the nucleus of the precursor and a second step of growing the nucleus formed in the first step, wherein a transition metal compound solution is fed at a flow rate of 15 mL/min to 55 mL/min into a batch-type reactor during the first step and the second step, wherein a stirring speed inside the reactor during the first step is between 200 rpm and 875 rpm, and a stirring speed inside the reactor during the second step is 475 rpm or less.

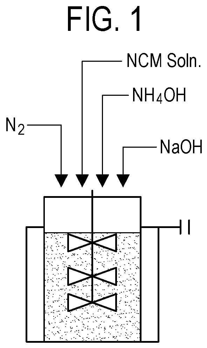

FIG. 1 is an exemplary diagram illustrating the method for manufacturing a positive electrode active material precursor according to the present disclosure. As illustrated in FIG. 1, a batch-type reactor can be used to prepare a reaction slurry containing an anode electrode active material precursor by co-precipitating while introducing a solution containing transition metals, an aqueous alkaline solution, and a solution containing ammonium ions and stirring same. By controlling the feed rate of each component and the stirring speed during the nucleation and growth stages of the precursor to respective predetermined levels a consistent level upon the co-precipitation as per the present disclosure, the formation of microparticles stage can be minimized during the nucleus growth, allowing for the production of an anode active material precursor with the desired particle size and a uniform particle size distribution. Consequently, the desired tap density, specific surface area, and other physical properties of the anode active material are achieved, improving the battery's charge/discharge capacity performance.

According to the present disclosure, before introducing the solution containing transition metals, basic aqueous solution, and ammonium ions thereinto, the batch-type reactor is added with deionized water and purged with nitrogen gas ($N_2$) to remove dissolved oxygen from the water, creating an antioxidative atmosphere inside the reactor. This antioxidative atmosphere may be maintained until the co-precipitation reaction is complete.

Next, the solution containing transition metals, basic aqueous solution, and ammonium ions may be continuously supplied to the batch reactor through the inlet provided thereto. These solutions are mixed inside the reactor to form a reaction solution, and the co-precipitation reaction of the reaction solution can result in the formation of particles of the positive electrode active material precursor.

As shown in FIG. 1, a stirrer can be installed in the batch reactor. The stirrer might be an impeller, but with no limitations thereto. In the present disclosure, a three-blade impeller, when used as the stirrer, can stir the reaction slurry from the bottom to the top.

Below, each step of the precursor manufacturing method according to the present disclosure is described in more detail.

Nucleation Step (a first step)

The first step is to form a nucleus of the anode active material precursor. Specifically, when a solution containing transition metals, a nitrogen-containing compound, and a basic compound are introduced and stirred within the batch reactor, nuclei of the precursor particles in the form of transition metal hydroxides can be formed through co-precipitation. Here, the nuclei of the precursor particles have an average particle size $D_{50}$ ranging from 1.2 $\mu$m to 6.0 $\mu$m and specifically from 1.5 $\mu$m to 5.5 $\mu$m.

The stirring speed inside the reactor during the first step may range from 200 rpm to 875 rpm, preferably from 300 rpm to 850 rpm, and more preferably from 500 rpm to 800 rpm. If the stirring speed during the first step is less than 200 rpm, the mixing between the components is insufficient, leading to delayed particle formation and decreased yield. If the stirring speed during the first step is greater than 875 rpm, the nucleus of the precursor is not properly generated due to the difficulty of agglomeration between microparticles.

The pH of the reaction solution during the fisrt step may be between 10.5 and 13.5, preferably between 10.8 and 13.0, and more preferably between 11.0 and 12.8. When the pH of the reaction solution is within these ranges, it allows for controlled initial particle formation. The pH of the reaction solution can be adjusted by regulating the flow rates of the solutions containing transition metals, nitrogen-containing compounds, and/or basic compounds.

The co-precipitation reaction in the first step may be carried out for at least 0.5 hours, preferably for 0.5 to 10 hours, and more preferably for 0.5 to 7 hours. Given the range of co-precipitation time in step, the co-precipitation ensures that a consistent composition of the precursor nuclei is sufficiently formed, thereby enhancing the yield of the positive electrode active material precursor.

The co-precipitation reaction in the fisrt step may be carried out under an inactive atmosphere such as nitrogen or argon at a temperature of 40°C to 60°C. When the temperature is within this range, it is possible to control the rate of the co-precipitation reaction.

The transition metal compound solution may include at least one element selected from a group consisting of nickel, cobalt, and manganese. For example, the transition metal compound solution may include a nickel-cobalt-manganese-based compound.

The transition metal compound solution in an embodiment of the present disclosure may include nickel in an amount of 60 mol% to 96 mol% and preferably 80 mol% to 96 mol%, cobalt in an amount of 0 mol% to 20 mol% and preferably 0 mol% to 10 mol%, and manganese in an amount of 4 mol% to 40 mol% and preferably 4 mol% to 20 mol%. When the content of nickel, cobalt, and manganese in the solution falls within these ranges, the battery is given high capacity and energy density per volume, potentially increasing the driving range per charge for electric vehicles.

The transition metal compound solution can be prepared by dissolving transition metal-containing raw materials in a solvent such as water. From a productivity perspective, the concentration of the transition metal compound solution might range from 1.80 M to 2.65 M and preferably from 2.00 M to 2.55 M. The amounts of each transition metal-containing raw material added may be determined considering the desired molar ratios of the transition metals in the final positive electrode active material.

Transition metal-containing raw materials might include acetates, carbonates, nitrates, sulfates, halides, sulfides, oxides, hydrates, hydroxides, and/or oxyhydroxides of transition metals, but are not limited thereto. Preferably, the raw materials may include transition metal hydrates, which are advantageous for ease of storage and use.

The transition metal compound solution can be prepared by dissolving raw materials containing nickel, cobalt, and manganese in water. For instance, nickel-containing raw materials may be $Ni(OH)_2$, $NiO$, $NiOOH$, $Ni-CO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, nickel salts of fatty acids, nickel halides, or a combination thereof. Cobalt-containing raw materials may be $CoSO_4$, $Co(OH)_2$, $CoOOH$, $Co(OCOCH_3)_2 \cdot 4H_2O$, $Co(NO_3)_2 \cdot 6H_2O$, $CoSO_4 \cdot 7H_2O$, $Co(SO_4)_2 \cdot 7H_2O$, or a combination thereof. Manganese-containing raw materials may be manganese oxides such as $Mn_2O_3$, $MnO_2$, and $Mn_3O_4$, manganese salts such as $MnCO_3$, $Mn(NO_3)_2$, $MnSO_4$, $MnSO_4 \cdot H_2O$, manganese acetate, manganese dicarboxylates, manganese citrate, and manganese salts of fatty acids, manganese oxyhydroxides, manganese chloride, or a combination thereof. For example, $NiSO_4 \cdot 6H_2O$ may be used as a nickel source, $CoSO_4 \cdot 7H_2O$ as a cobalt source, and $MnSO_4 \cdot H_2O$ as a manganese source.

If the anode active material precursor includes other metal elements (M) besides nickel (Ni), manganese (Mn), and cobalt (Co), raw materials containing these additional metal elements (M) may optionally be added during the preparation of the transition metal compound solution. These metal elements (M) may include one or more elements selected from the group consisting of W, Y, Ba, Ca, Mo, Cr, Al, Zr, Ti, Mg, Ta, and Nb. Furthermore, the raw materials containing metal element (M) may include acetates, carbonates, nitrates, sulfates, halides, sulfides, hydroxides, oxyhydroxides, and/or oxides of these metals, but are not limited thereto.

The nitrogen-containing compound solution may include an ammonium cation complexing agent. This complexing agent may be at least one compound selected from the group consisting of $NH_4OH$, $(NH_4)_2SO_4$, $NH_4NO_3$, $NH_4Cl$, $CH_3COONH_4$, and $NH_4CO_3$. For example, the nitrogen-containing compound solution may be prepared by dissolving an ammonium cation complexing agent in a solvent. The solvent used can be water or a mixture of water and an organic solvent (such as alcohol). The concentration of the nitrogen-containing compound solution may range from 1% to 50% by weight and preferably from 5% to 25% by weight, which can effectively suppress the formation of microparticles.

The basic aqueous solution may include at least one selected from the group consisting of hydrates and hydroxides of alkali metals, and hydrates and hydroxides of alkaline earth metals. For instance, the basic aqueous solution can be prepared by dissolving at least one selected from the group consisting of NaOH, KOH, and $Ca(OH)_2$ in a solvent. The concentration of the basic aqueous solution may range from 5% to 50% by weight and preferably from 10% to 45% by weight. In this case, it is easy to adjust the pH.

Nucleus Growth Step (a second step)

The second step is the phase where the nuclei created in the first step are grown. Specifically in the second step, the relatively smaller particles among those generated in the first step disappear while the relatively larger particles increase in average particle size on the basis of the Ostwald ripening.

According to the present disclosure, the second step may be initiated once the average particle size $D_{50}$ of the precursor nuclei created in the first step reaches between 1.2 $\mu$m and 6.0 $\mu$m. In the second step, the same flow rates of the transition metal compound solution, nitrogen-containing compound solution, and basic compound solution introduced into the batch reactor as in the first step are maintained, but the stirring speed and pH are adjusted differently.

According to the method for manufacturing a precursor in the present disclosure, the average particle size $D_{50}$ of the precursor particles can grow by 0.5 $\mu$m to 1.5 $\mu$m every 5 hours at the beginning of the second step and then by 0.1 $\mu$m to 0.3 $\mu$m every 5 hours in the later part of the second step. As the second step progresses, the particle size distribution of the precursor within the reaction solution becomes more uniform, with the consequent gradual decrease in the Span value of the precursor particles.

The stirring speed within the reactor during the second step may be 475 rpm or less, preferably between 100 rpm and 475 rpm, and more preferably between 200 rpm and 450 rpm. If the stirring speed during the second step exceeds 475 rpm, it may predominantly lead to side reactions rather than nucleus growth, which could result in the formation of numerous microparticles, thereby causing an uneven particle size distribution of the precursor or increasing the time required for the co-precipitation reaction to achieve an average particle size $D_{50}$ of between 5 $\mu$m and 25 $\mu$m.

The pH of the reaction solution during the second step may be between 10.5 and 13.0, preferably between 10.8 and 12.5, and more preferably between 11.0 and 12.2. When the pH is within this range, the nucleus growth reaction predominates over the nucleus creation reaction. The pH of the reaction solution can be adjusted by regulating the flow rates of the transition metal compound solution, the nitrogen-containing compound solution, and/or the basic compound solution.

The concentration of ammonia in the reaction solution during the second step may range from 3,000 ppm to 7,000 ppm, preferably from 3,200 ppm to 6,500 ppm, and more preferably from 3,400 ppm to 6,000 ppm. If the ammonia concentration is below 3,000 ppm, new nuclei may form, leading to the creation of microparticles in the reaction solution. Conversely, if the ammonia concentration exceeds 7,000 ppm, nickel may form new complexes with ammonia, leading to microparticle formation. The ammonia concentration in the reaction solution may be controlled through the flow rate of the nitrogen-containing compound solution.

The co-precipitation reaction in the second step may last for at least 12 hours, preferably between 15 and 70 hours, and more preferably between 18 and 60 hours. When the co-precipitation reaction time falls within these ranges, the co-precipitation ensures the production of an anode active material precursor with a consistent particle size distribution and the desired average particle size.

The co-precipitation reaction in the second step can be conducted under an inactive atmosphere such as nitrogen or argon at temperatures of 40°C to 60°C. Maintaining the temperature within this range allows for controlled reaction speeds.

The flow rate of the transition metal compound solution introduced into the batch reactor during the first and second steps may range from 15 mL/min to 55 mL/min, preferably from 16 mL/min to 50 mL/min, and more preferably from 18 mL/min to 45 mL/min. If the flow rate is less than 15 mL/min, it may lead to reduced productivity, while a flow rate exceeding 55 mL/min may cause undesirable side reactions.

During the first and second steps, the flow rate of the nitrogen-containing compound solution may be between 1.0 mL/min and 10.0 mL/min, preferably between 1.2 mL/min and 8.0 mL/min, and more preferably between 1.5 mL/min and 5.0 mL/min. Maintaining the flow rate within these ranges can ensure adequate control of nucleus creation while keeping the ammonia concentration in the reaction solution at appropriate levels.

The flow rate of the basic compound solution during the first and second steps may range from 8.0 mL/min to 32.0 mL/min, preferably from 9.0 mL/min to 29.0 mL/min, and more preferably from 10.0 mL/min to 26.0 mL/min. This range helps maintain the pH at a suitable level and allows for effective co-precipitation of the transition metal compound solution.

During the co-precipitation reaction in the first and second steps, once the batch reactor is filled with the reaction solution, the introduction of each component and the rotation of the stirrer are halted, and the mixture is allowed to settle for one hour to promote precipitation. Subsequently, the supernatant is separated from the anode active material precursor particles. To prevent microparticle formation during any subsequent stirring, the separation and discharge of the supernatant are controlled so that the stirrer's upper part remains submerged at least 2 cm below the surface of the reaction solution, adjusting the discharge rate and volume accordingly.

For the anode active material precursor produced through the first and second steps, the Span value, as defined by the following Equation 1, may be 0.55 or less, preferably 0.50 or less, and more preferably between 0.20 and 0.50:

[Equation 1]

$$Span = (Particle\ Size\ D_{90} - Particle\ Size\ D_{10}) / Average\ Particle\ Size\ D_{50}$$

When the Span value of the precursor is within these ranges, it indicates a small deviation in particle size diameter, which helps achieve the desired tap density, specific surface area, and other physical properties of the precursor, and can also improve the charge/discharge capacity of the anode material.

Furthermore, following the first and second steps, the method for manufacturing the precursor according to the present disclosure may further include a washing and drying step (step 3).

Washing and Drying Step (a third step)

The third step includes washing and drying the anode active material precursor that has been generated through the first and second steps. The third step is adapted for separating the anode active material precursor from the reaction mixture and subsequently collecting same.

Once the average particle size $D_{50}$ of the precursor developed in the first and second steps reaches between 5 $\mu$m and 25 $\mu$m, specifically between 6 $\mu$m and 22 $\mu$m, and more specifically between 7 $\mu$m and 20 $\mu$m, the washing process may begin. For this purpose, the reaction solution containing the precursor may be transferred to equipment used in a filter press process. The filter press process involves inputting the reaction mixture under a pressure into a sealed filtration chamber where the solid (cake) and liquid (filtrate) are separated through a filtration medium while carrying out a washing process. Once the washing of the separated precursor particles is complete, gases such as nitrogen, argon, oxygen, or compressed air may be supplied at a pressure of 0.4 MPa to dehydrate the supernatant and wash liquids.

After completion of the washing process for the precursor, the next step is to dry the precursor to remove moisture from the anode active material precursor. The drying process is designed to reduce the moisture content to 1.0% by weight or less and preferably to 0.8% by weight or less, based on the total weight of the precursor. Given the moisture content levels, good productivity and quality can be brought about in subsequent manufacturing processes.

Furthermore, the method for manufacturing a precursor according to the present disclosure may further include a grinding process and/or a classification process as necessary.

Hereinafter, the embodiments of the present disclosure will be described in detail so that the present disclosure can be easily realized by those skilled in the art. However, the present disclosure can be implemented in various different forms and is not limited to the embodiments described herein.

EXAMPLES AND COMPARATIVE EXAMPLES

EXAMPLE 1

(1) Nucleation Step (the first step)

Hydrates of $NiSO_4 \cdot 6H_2O$, $CoSO_4 \cdot 7H_2O$, and $MnSO_4 \cdot H_2O$ were mixed at a molar ratio of nickel : cobalt : manganese of 88:5.0:7.0 in deionized water to prepare a 2.4 M transition metal compound solution.

Into a 30-liter batch-type reactor were introduced 15 liters of deionized water, followed by purging with nitrogen gas at a flow rate of 5 mL/min to remove dissolved oxygen from the water and create a non-oxidative atmosphere inside the reactor. Subsequently, while continuing to purge the reactor with nitrogen gas at a flow rate of 5 mL/min, the transition metal compound solution was fed at a flow rate of 37.50 mL/min, a 25 wt% NaOH solution at a flow rate of 21.82 mL/min, and a 9 wt% $NH_4OH$ solution at a flow rate of 3.41 mL/min.

During this step, adjustment was made to maintain the temperature of the batch-type reactor at 50°C, the pH of the reaction mixture at 11.8, and the stirring speed by the impeller at 750 rpm.

The co-precipitation reaction in the nucleation step was carried out for 1 hour.

(2) Nucleus Growth Step (the second step)

Following the completion of the first step, a 1N sulfuric acid solution was introduced into the batch-type reactor to adjust the pH of the reaction solution into 11.2 and the stirring speed, driven by the impeller, was changed to 400 rpm.

100 mL of the reaction solution was extracted every 5 hours, after which ammonia titration was conducted. To maintain the ammonia concentration within the reactor at 4,000 ppm, a $NH_4OH$ solution was further added when the ammonia concentration decreased.

Throughout the first and second steps, 50 mL of the reaction solution was extracted every hour, and tested at room temperature (25°C) to ensure that the pH remained stable at 11.2. Once the pH measurements of the extracted reaction solution were completed, the reaction solution was reintroduced into the reactor. Additionally, an examination was made using electrodes installed inside the reactor to monitor whether the reaction solution maintained a pH of 10.75 at 50°C.

During the co-precipitation reaction in the first and second steps, when the 30 L reactor was full, the introduction of components and the rotation of the impeller were stopped. The mixture was then allowed to settle for one hour to promote precipitation. Following the precipitation, the NCM precursor and the supernatant were separated. The supernatant was discharged in a volume of 10 L and 12 L. To prevent the impeller from causing turbulence at the surface of the reaction solution, the rate and amount of supernatant discharge were controlled so that the top of the impeller was submerged at least 2 cm below the surface of the co-precipitation liquid.

(3) Washing and Drying Step (the third step)

After the co-precipitation reactions in the first and second steps had progressed such that the average particle size $D_{50}$ of the precursor reached between 5 μm and 25 μm, the reaction solution was transferred to a filter press process. In the filter press process, the reaction solution was pumped into a sealed filtration chamber, where the solid (cake) and liquid (filtrate) were separated through a filter medium while conducting the washing procedure. After the washing of the precursor particles was completed, nitrogen, argon, oxygen, or compressed air was supplied at a pressure of 0.4 MPa to dehydrate the supernatant and wash liquids.

Following the filter press and washing processes, the positive electrode active material precursor was dried under conditions of 150°C for 8 hours so that the moisture content within the positive electrode active material precursor was reduced to 0.5 wt% or less.

EXAMPLE 2

The positive electrode active material precursor was prepared in the same manner as in Example 1, with the exception that a 2.4 M transition metal compound solution was introduced at a flow rate of 18.03 mL/min, a 25 wt% NaOH solution at a flow rate of 11.33 mL/min, and a 9 wt% NH$_4$OH solution at a flow rate of 1.86 mL/min.

COMPARATIVE EXAMPLE 1

The positive electrode active material precursor was prepared in the same manner as in Example 1, except for the stirring speeds, which were 750 rpm during the first step and initially 625 rpm for the first 15 hours of the second step, then reduced to 500 rpm until the end of the process.

COMPARATIVE EXAMPLE 2

The positive electrode active material precursor was prepared in the same manner as in Example 1, with the exception that the flow rates were set to be 18.03 mL/min for a 2.4 M transition metal compound solution was introduced at a flow rate of 18.03 mL/min, a 25 wt% NaOH solution at a flow rate of 11.33 mL/min, and a 9 wt% NH$_4$OH solution at a flow rate of 1.86 mL/min, and the stirring speed was 625 rpm in both the first step and the second step.

EXPERIMENTAL EXAMPLE 1: SEM Image Analysis of Precursors

During the first and second steps in Examples 1-2 and Comparative Examples 1-2, 50 ml of the reaction solution was extracted every 5 hours and dried, followed by SEM (Scanning Electron Microscopy) imaging for precursor particles.

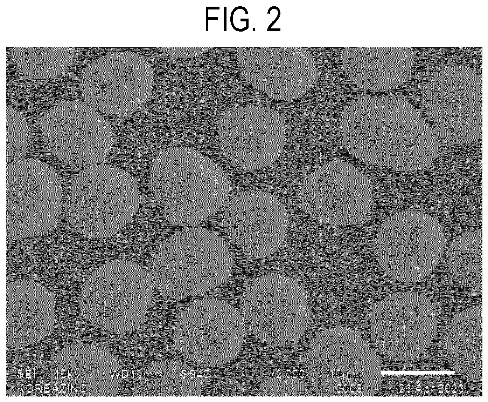

FIG. 2 is an SEM image of the positive electrode active material precursor extracted after 48 hours of co-precipitation reaction and subsequent drying according to Example 1 of the present disclosure.

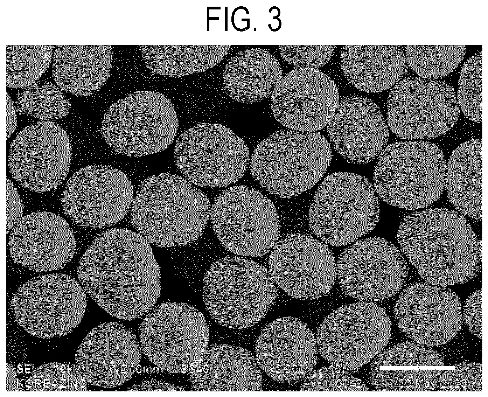

FIG. 3 is an SEM image of the positive electrode active material precursor extracted after 34 hours of co-precipitation reaction and subsequent drying according to Example 2 of the present disclosure

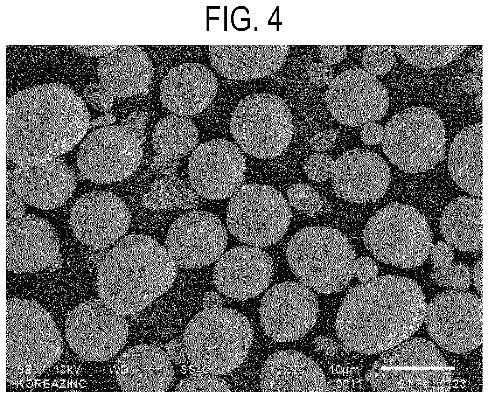

FIG. 4 is an SEM image of the positive electrode active material precursor extracted after 55 hours of co-precipitation reaction and subsequent drying according to Comparative Example 1 of the present disclosure.

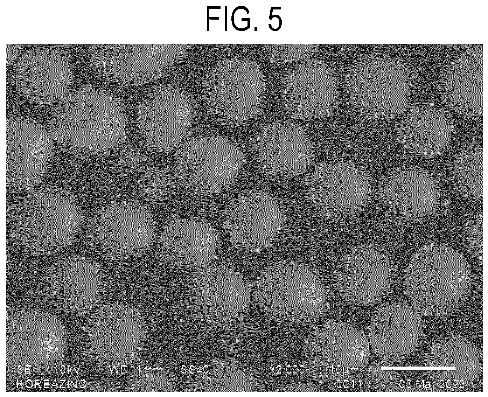

FIG. 5 is an SEM image of the positive electrode active material precursor extracted after 55 hours of co-precipitation reaction and subsequent drying according to Comparative Example 2 of the present disclosure.
As shown in FIGS. 2 to 5, fine particles in Examples 1 and 2 where the stirring speed was set to be 200 rpm to 875 rpm during the fisrt step and 475 rpm or less during the second step were much less than those in Comparative Examples 1 and 2 where the stirring speed was outside the above ranges.

EXPERIMENTAL EXAMPLE 2: Analysis for Particle Size and Composition of Precursors

During the first and second steps of Examples 1-2 and Comparative Examples 1-2, 50 ml of reaction solution was extracted every 5 hours, followed by analysis of the precursors' particle size and composition.

Specifically, particle sizes were analyzed using Mastersizer 2000 from Malvern under wet conditions.

Composition Analysis was conducted using Agilent 5900 ICP-OES under inductively coupled plasma conditions.

The analysis results of particle sizes and composition of the extracted reaction solutions from Examples 1-2 and Comparative Examples 1-2 are summarized in Table 1 below.

TABLE 1

| | | Unit | Ex. 1 | Ex. 2 | C. Ex. 1 | C. Ex. 2 |
|---|---|---|---|---|---|---|
| Flow rate | Transition Metal | ml/min | 37.50 | 18.03 | 37.50 | 18.03 |
| | NaOH | ml/min | 21.82 | 11.33 | 21.82 | 11.33 |
| | $NH_4OH$ | ml/min | 3.41 | 1.86 | 3.41 | 1.86 |
| Stirring speed | The first step | rpm | 750 | 750 | 750 | 625 |
| | The second step | rpm | 400 | 400 | 625-> 500 | 625 |
| Particle size analysis | $D_{50}$ | μm | 10.0 | 10.00 | 10.20 | 10.32 |
| | $D_{10}$ | μm | 8.10 | 7.80 | 7.61 | 8.33 |
| | $D_{90}$ | μm | 12.45 | 12.64 | 13.34 | 13.07 |
| | $D_{min}$ | μm | 4.0 | 3.50 | 3.20 | 4.00 |
| | $D_{max}$ | μm | 16.7 | 16.70 | 17.90 | 17.90 |
| | Span | - | 0.44 | 0.48 | 0.56 | 0.46 |
| Composition | Ni | mol% | 88.1 | 87.9 | 87.8 | 88.0 |
| | Co | mol% | 4.9 | 5.0 | 5.1 | 4.9 |
| | Mn | mol% | 7.1 | 7.2 | 7.1 | 7.1 |
| Co-precipitation reaction time | | hr | 48 | 34 | 34 | 55 |

According to Table 1, Examples 1 and 2 where the stirring speed was set to be between 200 rpm and 875 rpm during the first step and 475 rpm or less during the second step exhibited lower Span values and shorter co-precipitation reaction times compared to Comparative Examples 1 and 2 where the stirring speed during the second step exceeded these ranges. The data indicates that the particle size distribution in Examples 1 and 2 is more uniform than that in Comparative Example 1 and the necessary co-precipitation reaction time to produce the precursor is significantly reduced compared to Comparative Example 2.

The technical idea of the present disclosure has been described heretofore with reference to some embodiments and examples shown in the accompanying drawings. However, it is to be understood that various substitutions, modifications and alterations may be made without departing from the technical idea and scope of the present disclosure that can be understood by those of ordinary skill in the technical field to which the present disclosure pertains. Further, it is to be understood that such substitutions, modifications and alterations fall within the appended claims.

**Claims**

1.   A method for manufacturing a positive electrode active material precursor, the method comprising:

a first step of creating the nucleus of the precursor; and
a second step of growing the nucleus formed in the first step,
wherein a transition metal compound solution is fed at a flow rate of 15 mL/min to 55 mL/min into a batch-type reactor during the first step and the second step,
wherein a stirring speed inside the reactor during the first step is between 200 rpm and 875 rpm, and a stirring speed inside the reactor during the second step is 475 rpm or less.

2. The method of claim 1, wherein the transition metal compound solution contains at least one element selected from the group consisting of nickel, cobalt, and manganese.

3. The method of claim 1, wherein the transition metal compound solution contains:

  nickel in an amount of 60 mol% to 96 mol%;
  cobalt in an amount of 0 mol% to 20 mol%; and
  manganese in an amount of 4 mol% to 40 mol%.

4. The method of claim 1, wherein a solution within the batch-type reactor has a pH of 10.5 to 13.5 in the first step.

5. The method of claim 1, wherein a solution within the batch-type reactor has a pH of 10.5 to 13.5 in the second step.

6. The method of claim 1, wherein a solution within the batch-type reactor has an ammonia concentration of 3,000 ppm to 7,000 ppm in the second step.

7. The method of claim 1, wherein a nitrogen-containing compound solution is fed at a flow rate of 1.0 mL/min to 10.0 mL/min during the first step and the second step.

8. The method of claim 1, wherein a basic compound solution is fed at a flow rate of 8.0 mL/min to 32.0 mL/min during the first step and the second step.

9. The method of claim 1, wherein the positive electrode active material precursor generated through the first step and the second step has a Span value of 0.55 or less as measured according to the following Equation 1:

[Equation 1]

$$Span = (Particle\ diameter\ D_{90} - Particle\ diameter\ D_{10}) / Particle\ average\ diameter\ D_{50}$$

10. The method of claim 1, further comprising a third step of washing and drying the positive electrode precursor generated through the first step and the second step.

# FIG. 1

FIG. 2

FIG. 3

FIG. 4

FIG. 5

## INTERNATIONAL SEARCH REPORT

| International application No. |
| --- |
| **PCT/KR2024/005159** |

### A. CLASSIFICATION OF SUBJECT MATTER

**C01G 53/00**(2006.01)i; **H01M 4/525**(2010.01)i; **H01M 4/505**(2010.01)i; **H01M 4/02**(2006.01)i

According to International Patent Classification (IPC) or to both national classification and IPC

### B. FIELDS SEARCHED

Minimum documentation searched (classification system followed by classification symbols)

C01G 53/00(2006.01); C01G 49/00(2006.01); H01M 4/485(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(cathode active material), 배치(batch), 교반 속도(stirring speed), 성장 (growth), 유량(flow rate), 이차전지(secondary battery)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2021-0036847 A (LG CHEM, LTD.) 05 April 2021 (2021-04-05) See paragraphs [0019], [0020], [0037] and [0112]-[0115], and claims 1, 5 and 9. | 1-5,7,8,10 |
| Y | | 6,9 |
| Y | KR 10-1748999 B1 (ENERGY MATERIAL TECHNOLOGY CO., LTD.) 20 June 2017 (2017-06-20) See paragraphs [0115]-[0121]. | 6 |
| Y | KR 10-2016-0006172 A (SUMITOMO METAL MINING CO., LTD.) 18 January 2016 (2016-01-18) See paragraphs [0061] and [0062]. | 9 |
| A | KR 10-2018-0091754 A (LG CHEM, LTD.) 16 August 2018 (2018-08-16) See paragraphs [0018], [0048], [0055] and [0155], and claims 1 and 5. | 1-10 |
| A | CN 116986636 A (HUAYOU NEW ENERGY TECHNOLOGY (QUZHOU) CO., LTD. et al.) 03 November 2023 (2023-11-03) See paragraphs [0068] and [0208]-[0215]. | 1-10 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **19 September 2024** | **20 September 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/005159**

| Patent document cited in search report | | | Publication date (day/month/year) | Patent family member(s) | | | Publication date (day/month/year) |
|---|---|---|---|---|---|---|---|
| KR | 10-2021-0036847 | A | 05 April 2021 | CN | 113748541 | A | 03 December 2021 |
| | | | | KR | 10-2470969 | B1 | 28 November 2022 |
| | | | | US | 2022-0238871 | A1 | 28 July 2022 |
| | | | | WO | 2021-060911 | A1 | 01 April 2021 |
| KR | 10-1748999 | B1 | 20 June 2017 | None | | | |
| KR | 10-2016-0006172 | A | 18 January 2016 | CN | 105122517 | A | 02 December 2015 |
| | | | | CN | 105122517 | B | 31 October 2017 |
| | | | | EP | 3007254 | A1 | 13 April 2016 |
| | | | | EP | 3007254 | B1 | 19 April 2023 |
| | | | | JP | 2016-154143 | A | 25 August 2016 |
| | | | | JP | 6159395 | B2 | 05 July 2017 |
| | | | | KR | 10-2203425 | B1 | 15 January 2021 |
| | | | | US | 10424787 | B2 | 24 September 2019 |
| | | | | US | 11283072 | B2 | 22 March 2022 |
| | | | | US | 2016-0093885 | A1 | 31 March 2016 |
| | | | | US | 2018-0254481 | A2 | 06 September 2018 |
| | | | | US | 2020-0006770 | A1 | 02 January 2020 |
| | | | | WO | 2014-181891 | A1 | 13 November 2014 |
| KR | 10-2018-0091754 | A | 16 August 2018 | CN | 109843810 | A | 04 June 2019 |
| | | | | CN | 109843810 | B | 18 May 2021 |
| | | | | KR | 10-2086536 | B1 | 10 March 2020 |
| | | | | TW | 201840483 | A | 16 November 2018 |
| | | | | TW | I648222 | B | 21 January 2019 |
| | | | | US | 10892471 | B2 | 12 January 2021 |
| | | | | US | 2019-0214628 | A1 | 11 July 2019 |
| | | | | WO | 2018-143783 | A1 | 09 August 2018 |
| CN | 116986636 | A | 03 November 2023 | None | | | |

Form PCT/ISA/210 (patent family annex) (July 2022)